# EUROPÄISCHE PATENTSCHRIFT

(11) **EP 1 604 131 B1**
(45) Veröffentlichungstag und Bekanntmachung des Hinweises auf die Patenterteilung: **30.06.2010**
(21) Anmeldenummer: 04714767.3
(22) Anmeldetag: 26.02.2004
(51) Int. Cl.: F16H 7/12

(54) **SPANNVORRICHTUNG**
TENSIONING DEVICE
DISPOSITIF TENDEUR

(30) Priorität: 14.03.2003 DE 10311206
(43) Veröffentlichungstag der Anmeldung: 14.12.2005
(73) Patentinhaber: Schaeffler Technologies GmbH & Co. KG, 91074 Herzogenaurach (DE)
(72) Erfinder: GRAF, Herbert, 96120 Bischberg (DE)
(86) Internationale Anmeldenummer: PCT/EP2004/001903
(87) Internationale Veröffentlichungsnummer: WO 2004/081413

(56) Entgegenhaltungen:
- EP-A- 1 273 826
- US-A- 5 919 107
- US-A- 6 149 542
- US-B1- 6 375 588

## Beschreibung

### Gebiet der Erfindung

Die Erfindung bezieht sich auf eine Spannvorrichtung für einen Zugmitteltrieb, die eine ortsfest an einem Maschinenteil fixierte Schildplatte umfasst, an der ein hohlzylindrisch gestalteter, axial vorstehender Tragkörper drehstarr befestigt ist. Der Tragkörper ist von einem Arbeitsexzenter umschlossen, der begrenzt verdrehbar auf dem Tragkörper gelagert ist. Der Arbeitsexzenter steht in Wirkverbindung mit einer Spannrolle, welche wälzgelagert den Arbeitsexzenter umschließt und die in einer Einbaulage der Spannvorrichtung kraftschlüssig an dem Zugmittel anliegt. Eine Arretiereinrichtung ermöglicht, dass der Arbeitsexzenter gegenüber der Schildplatte in einer Endlage mittels eines Haltestiftes fixierbar ist. Die gesamte Spannvorrichtung ist mittels einer durch eine Längsbohrung des Tragkörpers geführte Verschraubung befestigt. Die Erfindung bezieht sich weiterhin auf ein Verfahren zur Montage einer solchen Spannvorrichtung.

### Hintergrund der Erfindung

Eine Spannvorrichtung der zuvor genannten Bauart ist beispielsweise aus der DE 199 10 828 A1 bekannt. Diese Spannvorrichtung schließt eine Arretiereinrichtung ein, bei der zur Erzielung einer definierten Endlage des Arbeitsexzenters gegenüber einer als Grundplatte bezeichneten Schildplatte ein Haltestift in zueinander korrespondierenden Bohrungen von drei Bauteilen eingefügt werden muss. In der arretierten Stellung ist der Haltestift in Bohrungen folgender Bauteile eingesetzt, in einer drehbar auf dem Bolzen bzw. dem Tragkörper angeordneten Scheibe, in einer Bohrung des Arbeitsexzenters sowie einer Schildplatte. Neben einer Vielzahl von einzelnen Bauteilen ermöglicht die bekannte Arretiereinrichtung keine Fixierung des Arbeitsexzenters gegenüber der Schildplatte nach erfolgter Montage der Spannvorrichtung, beispielsweise an der Brennkraftmaschine. Die bekannte Arretiereinrichtung ist insbesondere dazu vorgesehen, das Zugmittel vereinfacht auf alle zugehörigen Riemenscheiben des Zugmitteltriebs aufzulegen bei einem arretierten Arbeitsexzenter in der Endlage. Für Wartungsarbeiten, beispielsweise einem Austausch des Zugmittels, der bei einer Arretierung des Arbeitsexzenters in der Endlage vereinfacht durchgeführt werden kann, sieht die bekannte Spannvorrichtung nicht vor.

Aus der EP 1 273 826 A2 ist eine gattungsbildende Spannvorrichtung bekannt. Als Maßnahme, um einen Schmutzeintrag in die Gleitlagerung der Spannvorrichtung zu vermeiden, ist zwischen dem Arbeitsexzenter und der Schildplatte eine federbelastete Reibscheibe integriert, die gleichzeitig die Funktion einer Dämpfung übernimmt. Nachteilig vergrößert sich dadurch der Bauteileumfang der Spannvorrichtung.

### Zusammenfassung der Erfindung

Der vorliegenden Erfindung liegt die Aufgabe zu Grunde, eine Arretiereinrichtung für eine Spannvorrichtung zu schaffen, mit der vereinfacht der Arbeitsexzenter in einer Endlage arretierbar ist, und die eine verbesserte Abdichtung der Gleitlagerung sicherstellt.

Diese Aufgabe wird insbesondere durch die in den unabhängigen Ansprüchen 1 und 10 aufgeführten Merkmale gelöst.

Gemäß Anspruch 1 ist der Arbeitsexzenter einstückig mit einem auch als ein Führungsarm zu bezeichneten Zeiger verbunden, der sich radial über die Außenkontur der Spannrolle erstreckt und endseitig eine Werkzeugaufnahme sowie eine Aussparung für den Haltestift einschließt. Dazu ist der Zeiger in einem axial von der Spannrolle und der Schildplatte begrenzten Einbauraum angeordnet. Diese konstruktive Ausbildung ermöglicht eine gezielte Arretierung des Zeigers und damit des Arbeitsexzenters mit der Schildplatte, die mit geringem axialen Abstand zueinander angeordnet und damit sicher arretiert werden können. Gemäß der Erfindung ist der Zeiger mittels eines handelsüblichen Werkzeugs verstellbar und einstellbar, indem das Werkzeug formschlüssig die Werkzeugaufnahme umgreift.

Diese Möglichkeit vereinfacht insbesondere im eingebauten Zustand der Spannvorrichtung einen Zugmittelaustausch, in dem die Spannrolle beispielsweise in eine dem Heißanschlag der Spannvorrichtung entsprechende Montageposition schwenkbar ist und damit die Zugmittelmontage und die Zugmitteldemontage vereinfacht. Weiterhin bietet es sich an, die erfindungsgemäße Arretiereinrichtung bei erforderlichen Wartungsarbeiten von Bauteilen der Brennkraftmaschine zu nutzen, die mittelbar oder unmittelbar mit dem Zugmitteltrieb in Verbindung stehen, wie beispielsweise die Einstellung von Gaswechselventilen der Brennkraftmaschine.

Ein weiterer Vorteil der Erfindung besteht darin, dass mit Hilfe der erfindungsgemäßen Arretiereinrichtung eine sich bei der Montage einstellende Nacharbeit möglich ist und eine einfach, jederzeit reproduzierbare Einbaulage des Arbeitsexzenters erreicht werden kann, verbunden mit gleichen Trumkräften in dem Zugmittel.

Die erfindungsgemäße Arretiereinrichtung ist kostengünstig realisierbar, da diese vorteilhaft vorhandene Bauteile nutzt, indem der vorhandene einstückig mit dem Arbeitsexzenter verbundene Zeiger, der die Einstellung des Arbeitsexzenters verdeutlicht, genutzt wird, um mit Hilfe des Haltestiftes den Arbeitsexzenter gegenüber der Schildplatte zu arretieren. Ohne Verwendung eines Spezialwerkzeugs ist gemäß der Erfindung die Arretierung möglich, wodurch die Spannvorrichtung in die sogenannte Montageposition zurückgestellt, und über den Haltestift arretiert werden kann.

Zur mittelbaren Abstützung der Torsionsfeder an der Schildplatte ist gemäß der Erfindung eine Führungsscheibe vorgesehen, die mit einem stirnseitigen Bord flächig an der Schildplatte abgestützt ist. Mittels eines axialen Zentrierbutzens, der formschlüssig in eine Ausnehmung der Schildplatte eingreift, sind diese Bauteile verdrehgesichert. Ein axial ausgerichteter Hülsenabschnitt der Führungsscheibe hat die Aufgabe, die Torsionsfeder zu führen. Vorteilhaft greift der Hülsenabschnitt endseitig in einen radial gestuften Abschnitt des Arbeitsexzenters, die gemeinsam ein Dichtungslabyrinth bilden. Damit stellt sich eine wirksame Abdichtung der zwischen dem Arbeitsexzenter und dem Tragkörper vorgesehenen Gleitlagerung ein.

Weitere vorteilhafte Ausgestaltungen der Erfindung sind Gegenstand der abhängigen Ansprüche 2 bis 9.

Eine vorteilhafte Ausgestaltung der Erfindung sieht vor, dass der eine Doppelfunktion ausübende, einstückig mit dem Arbeitsexzenter verbundene Zeiger eine Kröpfung aufweist. Diese ist derart gestaltet, dass ein Freigang des Arbeitsexzenters beispielsweise gegenüber einer Versteifungsrippe des Maschinenteils gewährleistet ist. Damit ist die erfindungsgemäße Arretiereinrichtung auch mit einem vorhandenen Maschinenteil kombinierbar. Die Kröpfung kann beispielsweise so ausgeführt sein, dass deren Endabschnitt eine axial über die Außenkontur der Spannrolle bildenden Bereich bildet, wobei gleichzeitig ein ausreichender radialer Abstand eine ungehinderte Führung des Zugmittels außen auf der Spannrolle sicherstellt.

Zur Aufnahme des Haltestiftes, der in einer Endlage den Zeiger und damit den Arbeitsexzenter gegenüber der Schildplatte arretiert, bietet es sich an, dass der Zeiger mit einer Bohrung versehen ist. In der Endlage korrespondiert diese Bohrung mit einer Aussparung, vorzugsweise ausgebildet als eine gabelförmige Ausnehmung der Schildplatte, zur Aufnahme des Haltestiftes. Alternativ dazu bietet es sich an, in die Schildplatte eine Bohrung einzubringen, die mit einer Ausnehmung oder Aussparung des Zeigers zusammenwirkt.

Als Maßnahme, um die Stellbewegung der Spannvorrichtung, d. h. insbesondere die der Spannrolle in Verbindung des Arbeitsexzenters zu dämpfen, ist die Spannvorrichtung mit einer Dämpfungseinrichtung versehen. Dazu ist die Spannvorrichtung mit einer separaten, vorzugsweise zwischen dem Arbeitsexzenter und einem Schraubenkopf der Verschraubung eingesetzten Reibscheibe versehen. Alternativ dazu bietet es sich an, die Reibscheibe zwischen dem Arbeitsexzenter und einer an dem Tragkörper lagefixierten Stützscheibe anzuordnen. Außerdem ist die in einem Ringspalt zwischen dem Arbeitsexzenter und dem Tragkörper eingesetzte Gleitlagerbuchse als ein Mehrfunktionsteil ausbildbar. Dazu ist die Gleitlagerbuchse einstückig mit einem stirnseitig radial umlaufenden Bord versehen, der die Funktion einer Reibscheibe ausübt und der im eingebauten Zustand zwischen der Stirnseite des Arbeitsexzenters und der an dem Tragkörper lagefixierten Stützscheibe angeordnet ist oder alternativ einseitig unmittelbar an dem Kopf der Verschraubung anliegt. Die Reibscheibe wird dabei von einer in axialer Richtung wirkenden Kraftkomponente des vorzugsweise als eine Torsionsfeder ausgebildeten Federmittels beaufschlagt. Die Dämpfungseinrichtung beeinflusst unmittelbar die Wirkungsweise des Arbeitsexzenters und reduziert vorteilhaft die von der Brennkraftmaschine ausgelöste Drehungleichförmigkeit. Die nachteilig durch die Drehungleichförmigkeit ausgelösten Schwingungen werden über die Kurbelwelle der Brennkraftmaschine und der damit in Verbindung stehenden Riemenscheibe auf dem Zugmitteltrieb übertragen, die von der Dämpfungseinrichtung der Spannvorrichtung zumindest teilweise kompensiert werden. Damit kann eine verbesserte Lebensdauer des Zugmittels erreicht und gleichzeitig die Geräuschentwicklung des gesamten Zugmitteltriebs reduziert werden, aufgrund verringerter Schwingungsamplituden und einer reduzierten Schwingungsfrequenz des Zugmittels, einschließlich der Stellbewegung der Spannvorrichtung.

Die Torsionsfeder für die erfindungsgemäße Spannvorrichtung ist vorzugsweise mit einem ersten Federende an dem Arbeitsexzenter lagefixiert ist. Das zweite Federende der Torsionsfeder ist mittelbar oder unmittelbar drehfixiert an der Schildplatte abgestützt.

Zur vereinfachten Einstellung des Arbeitsexzenters weist dessen Zeiger eine Werkzeugaufnahme auf. Als Werkzeugaufnahme bietet es sich vorteilhaft an, den Zeiger endseitig als Vierkantprofil oder als ein flaches Rechteckprofil auszubilden. Vorzugsweise verlaufen die Anlageflächen in einem metrischen Axialabstand, so dass handelsübliche Werkzeuge, insbesondere Maulschlüssel eingesetzt werden können, um die Verstellung des Führungsarms und damit des Arbeitsexzenters gegenüber der Schildplatte zu realisieren.

Das erfindungsgemäße Verfahren gemäß Anspruch 10, zur Montage und Arretierung der Spannvorrichtung umfasst die folgenden Schritte. Zur Vormontage der erfindungsgemäßen Spannvorrichtung wird zunächst der Tragkörper an der Schildplatte befestigt. Anschließend werden die Bauteile Führungsscheibe, Torsionsfeder, Arbeitsexzenter einschließlich des zugehörigen Gleitlagers und der Spannrolle axial auf den Tragkörper aufgeschoben, in eine Anordnung, in der die Torsionsfeder zumindest teilweise vorgespannt ist und der Arbeitsexzenter zwischen zwei Endanschlägen der Schildplatte verdrehbar ist.

Anschließend wird eine Verschraubung, vorzugsweise eine Maschinenschraube in die Längsbohrung des Tragkörpers eingesetzt, nachdem zuvor eine an dem Tragbolzen und dem Arbeitsexzenter gleichzeitig abgestützte Reibscheibe in Verbindung einer Scheibe montiert wurde, durch die gleichfalls die Verschraubung geführt ist. Mittels der im Maschinenteil eingeschraubten Verschraubung sind alle Bauteile der Spannvorrichtung zusammengefügt. Der weitere Montageschritt sieht vor, den Arbeitsexzenter in eine Endlage zu verdrehen, bei der eine Lageübereinstimmung zwischen einer Bohrung und einer Ausnehmung des Arbeitsexzenters und der Schildplatte besteht, wobei diese Lage mittels eines Haltestiftes gesichert wird.

Die Endmontage sieht als ersten Schritt die Befestigung der Spannvorrichtung an einem Gehäuse, vorzugsweise dem Kurbelgehäuse einer Brennkraftmaschine vor, in dem das Maschinenteil der Spannvorrichtung mit dem Gehäuse verschraubt wird. Anschließend wird das Zugmittel auf alle mit dem Zugmitteltrieb verbundene Riemenscheiben aufgelegt, bevor der Haltestift gelöst wird, wodurch das Federmittel eine selbsttätige Verdrehung des Arbeitsexzenters auslöst und dabei das Zugmittel dauerhaft spannt.

### Kurze Beschreibung der Zeichnungen

Nachstehend wird die Erfindung anhand eines in insgesamt drei Figuren dargestellten Ausführungsbeispieles näher erläutert. Es zeigen:
- Figur 1: einen Längsschnitt durch eine erfindungsgemäße Spannvorrichtung;
- Figur 2: in einer Perspektive dargestellt, die Spannvorrichtung gemäß Figur 1;
- Figur 3: eine Explosionszeichnung der Spannvorrichtung gemäß Figur 1.

### Detaillierte Beschreibung der Zeichnungen

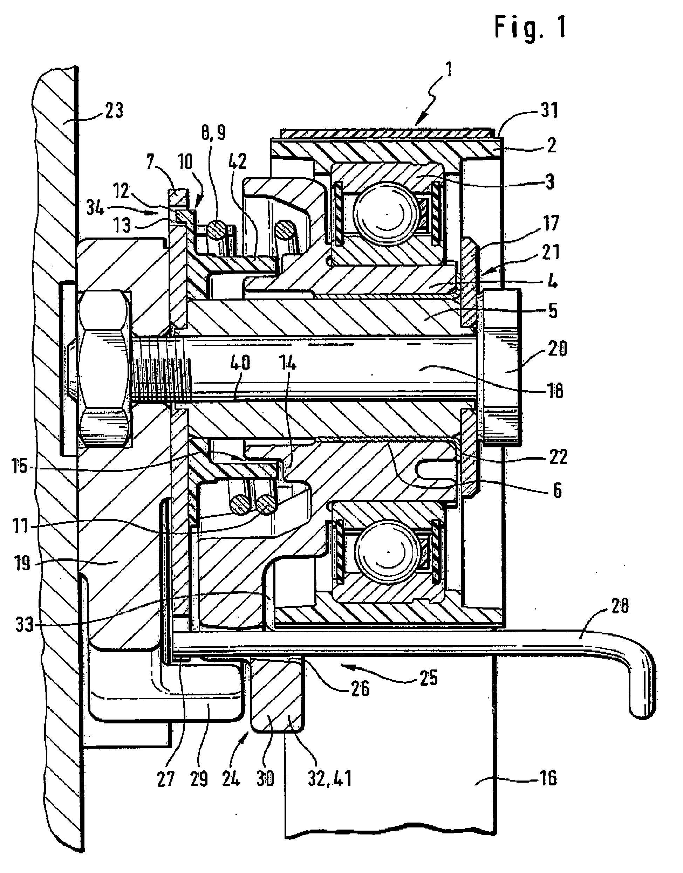

Bei der erfindungsgemäßen Spannvorrichtung 1 gemäß Figur 1 ist eine Spannrolle 2 über ein Wälzlager 3 drehbar auf einem Arbeitsexzenter 4 gelagert. Der einen Tragkörper 5 umschließende Arbeitsexzenter 4 ist mittels einer Gleitlagerbuchse 6 begrenzt verdrehbar auf dem Tragkörper 5 gelagert. Die Verdrehung des Arbeitsexzenters 4 bewirkt ein als Torsionsfeder ausgelegtes Federmittel 8, dessen erstes Federende 9 lagefixiert an einer Führungsscheibe 10 anliegt und das weitere Federende 11 mit dem Arbeitsexzenter 4 drehfest verbunden ist. Die flächig an der Schildplatte 7 abgestützte Führungsscheibe 10 weist zur Bildung einer Verdrehsicherung 34 einen Zentrierbutzen 12 auf, der formschlüssig in eine zugehörige Ausnehmung 13 der Schildplatte 7 eingreift. Der Hülsenabschnitt 42 der Führungsscheibe 10 dient zur Führung des Federmittels 8. An dem vom Zentrierbutzen 12 abgewandten Ende greift die Führungsscheibe 10 in einen radial gestuften Abschnitt 14 des Arbeitsexzenters 4 ein, wobei die Bauteile, die Führungsscheibe 10 gemeinsam mit dem Arbeitsexzenter 4 ein Dichtungslabyrinth 15 bilden und damit wirksam einen Eintritt von Verunreinigungen in den Einbauraum der Gleitlagerbuchse 6 bzw. einen Schmiermittelaustritt aus diesem Einbauraum verhindern.

Das Federmittel 8 übt neben einer Torsionskraft, mit der der Arbeitsexzenter 4 und damit die in Wirkverbindung stehende Spannrolle 2 kraftschlüssig an einem Zugmittel 16 abgestützt ist, weiterhin eine Axialkraft aus, die den Arbeitsexzenter 4 gegen eine Stützscheibe 17 kraftschlüssig beaufschlagt. Die beispielsweise stirnseitig an dem Tragkörper 5 abgestützte oder mit dem Tragkörper 5 drehfixiert angeordnete Stützscheibe 17 wird mittels einer in die Längsbohrung 40 eingesetzten Verschraubung 18 an den Tragkörper 5 gepresst. Die Verschraubung 18 bewirkt eine lösbare Befestigung der Spannvorrichtung 1, einschließlich der Schildplatte 7 an dem zugehörigen Maschinenteil 19.

Vorzugsweise ist die Stützscheibe 17 zwischen dem Tragkörper 5 und einem Schraubenkopf 20 der Verschraubung 18 angeordnet. Als Dämpfungseinrichtung 21, die gezielt Stellbewegungen der Spannrolle 2 dämpft, dient eine Reibscheibe 22, die in einem axial von der Stützscheibe 17 und einer Stirnseite des Tragkörpers 5 axial begrenzten Einbauraum angeordnet ist. Alternativ zu einer separaten Reibscheibe 22 bietet es sich an, die Gleitlagerbuchse 6 mit einem stirnseitigen umlaufenden Bord 39 zu versehen, zur Bildung einer Reibscheibe. Die gesamte Spannvorrichtung 1 ist an einem Gehäuse 23, beispielsweise einem Kurbelgehäuse einer in Figur 1 nicht abgebildeten Brennkraftmaschine verschraubt.

Mittels einer Arretiereinrichtung 25 ist der Arbeitsexzenter 4 in einer Endlage gegenüber der Schildplatte 7 fixierbar. Dazu ist ein einstückig mit dem Arbeitsexzenter 4 verbundener Zeiger 24, der die Stellung des Arbeitsexzenters 4 gegenüber der Schildplatte 7 sichtbar macht, mit einer Bohrung 26 versehen, die in einer Endlage mit einer Aussparung 27 oder einem Ausschnitt der

Schildplatte 7 korrespondiert. Die Arretierung kann mittels eines Haltestiftes 28 gesichert werden, der in die Bohrung 26 des Arbeitsexzenters 4 eingeführt, weiterhin in die Aussparung 27 verrastet. Der Zeiger 24 bildet eine Kröpfung 30, die eine Verdrehung des Arbeitsexzenters 4 auch gegenüber einer Versteifungsrippe 29 des Maschinenteils 19 ermöglicht. Der Endabschnitt 32 des Zeigers 24 übergreift dabei begrenzt eine Mantelfläche 31 der Spannrolle 2, wobei ein radialer Abstand zwischen der Spannrolle 2 und dem Zeiger 24 die Führung des Zugmittels 16 nicht beeinträchtigt. Durch die Anordnung des Zeigers 24 in einem axial von der Schildplatte 7 und der Spannrolle 2 begrenzten Einbauraum 33 bzw. des außerhalb der Mantelfläche 31 der Spannrolle 2 verlaufenden Endabschnitts 32 stellt sich eine einfache Handhabung des Haltestiftes 28 ein, der montagefreundlich in die Bohrung 26 des Zeigers 24 außerhalb der Spannrolle 2 eingeführt werden kann.

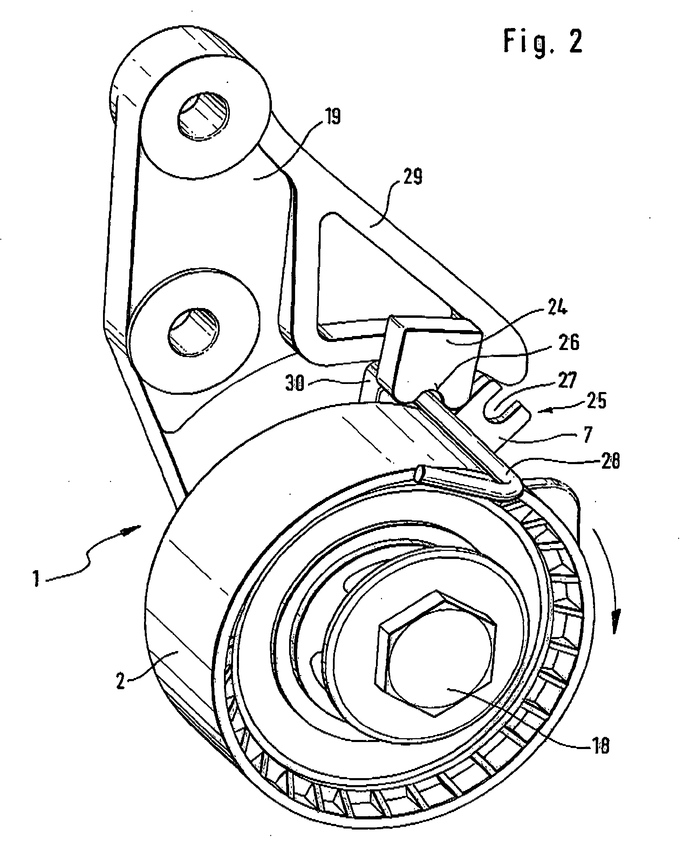

Die Figur 2 zeigt insbesondere die Gestaltung des Maschinenteils 19 in Verbindung mit der Schildplatte 7 bzw. der Spannrolle 2. Das vorzugsweise aus Leichtmetall als Gußteil gestaltete Maschinenteil 19 ist mit Versteifungsrippen 29 versehen, die unter anderem im Bereich eines Stellbereichs des Zeigers 24 angeordnet sind. Der Zeiger 24 weist folglich eine Kröpfung 30 auf, die eine ungehinderte Verstellung des Arbeitsexzenters 4 und dem damit verbundenen Zeiger 24 gegenüber der Schildplatte 7 und dem Maschinenteil 19 ermöglicht. Der gemäß Figur 2 in die Bohrung 26 des Zeigers 24 eingeführte Haltestift 28 kann nach einer weiteren Verdrehung in Pfeilrichtung, d. h. im Uhrzeigersinn, gegenüber der Schildplatte 7 bei einer übereinstimmenden Position mit der Einstellkerbe 27 der Schildplatte 7 eine Arretierung des Arbeitsexzenters 4 realisieren.

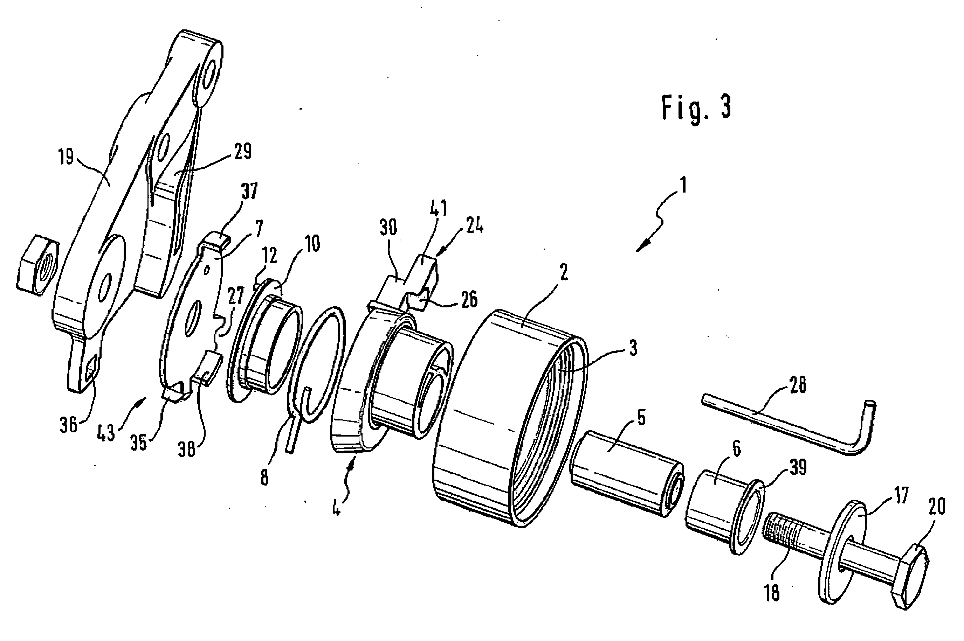

In Figur 3 sind alle Einzelteile der Spannvorrichtung 1 mittels einer Explosionszeichnung in einer Perspektive dargestellt. Die Figur 3 verdeutlicht insbesondere Details des Maschinenteils 19 und der Schildplatte 7. Als Verdrehsicherung 43 ist die vorzugsweise als ein Tiefziehteil gestaltete Schildplatte 7 mit einer Lasche 35 versehen, die formschlüssig in eine Aussparung 36 des Maschinenteils 19 eingreift. Die Schildplatte 7 bildet weiterhin axial in Richtung der Spannrolle 2 vorstehende Endanschläge 37, 38, die den maximalen Stellbereich des Arbeitsexzenters 4 festlegen, an denen sich in den Endlagen der Zeiger 24 abstützt. Das freie, eine Kröpfung 30 aufweisende Ende des Zeigers 24 bildet eine Werkzeugaufnahme 41. Diese ist so gestaltet, dass mittels eines handelsüblichen Maulschlüssels der Arbeitsexzenter 4 verstellbar ist. Außerdem verdeutlicht die Figur 3 die Gestaltung der Gleitlagerbuchse 6, die einstückig mit einem Bord 39 versehen ist, der die Funktion einer Reibscheibe übernimmt.

### Bezugszahlen

- 1: Spannvorrichtung
- 2: Spannrolle
- 3: Wälzlager
- 4: Arbeitsexzenter
- 5: Tragkörper
- 6: Gleitlagerbuchse
- 7: Schildplatte
- 8: Federmittel
- 9: Federende
- 10: Führungsscheibe
- 11: Federende
- 12: Zentrierbutzen
- 13: Ausnehmung
- 14: Abschnitt
- 15: Dichtungslabyrinth
- 16: Zugmittel
- 17: Stützscheibe
- 18: Verschraubung
- 19: Maschinenteil
- 20: Schraubenkopf
- 21: Dämpfungseinrichtung
- 22: Reibscheibe
- 23: Gehäuse
- 24: Zeiger
- 25: Arretiereinrichtung
- 26: Bohrung
- 27: Aussparung
- 28: Haltestift
- 29: Versteifungsrippe
- 30: Kröpfung
- 31: Mantelfläche
- 32: Endabschnitt
- 33: Einbauraum
- 34: Verdrehsicherung
- 35: Lasche
- 36: Aussparung
- 37: Endanschlag
- 38: Endanschlag
- 39: Bord
- 40: Längsbohrung
- 41: Werkzeugaufnahme
- 42: Hülsenabschnitt
- 43: Verdrehsicherung

## Patentansprüche

1. Spannvorrichtung (1) für einen Zugmitteltrieb, umfassend:
- eine ortsfest an einem Maschinenteil (19) fixierte Schildplatte (7), an der ein hohlzylindrisch gestalteter, axial vorstehender Tragkörper (5) drehstarr befestigt ist;
- ein gegen ein Federmittel (8) begrenzt verdrehbarer, den Tragkörper (5) umschließender Arbeitsexzenter (4);
- eine den Arbeitsexzenter (4) koaxial umschließende, wälzgelagerte Spannrolle (2), die in einer Einbaulage der Spannvorrichtung (1) kraftschlüssig an einem Zugmittel (16) anliegt;
- eine Arretiereinrichtung (25) mit der der Arbeitsexzenter (4) gegenüber der Schildplatte (7) in einer Endlage mittels eines Haltestiftes (28) fixierbar ist;
- eine durch eine Längsbohrung (40) des Tragkörpers (5) geführte Verschraubung (18), mit der die Spannvorrichtung (1) befestigt ist;
- eine Anzeige, die eine Einstellung des Arbeitsexzenters (4) gegenüber der Schildplatte (7) verdeutlicht;
**dadurch gekennzeichnet, dass** zur Bildung der Arretiereinrichtung (25) der Arbeitsexzenter (4) einstückig mit einem über eine Außenkontur, eine Mantelfläche (31) der Spannrolle (2) sich radial erstreckenden Zeiger (24) verbunden ist, der in einem axial von der Spannrolle (2) und der Schildplatte (7) begrenzten Einbauraum (33) angeordnet, endseitig eine Werkzeugaufnahme (41) sowie eine Aufnahme für den Haltestift (28) einschließt, und als Federmittel (8) eine Torsionsfeder an einem axial ausgerichteten Hülsenabschnitt (42) einer Führungsscheibe (10) geführt ist, die zur Bildung einer Verdrehsicherung (34) zumindest einen entgegengesetzt zu dem Hülsenabschnitt axial ausgerichteten, formschlüssig in eine Ausnehmung (13) der Schildplatte (7) eingepassten Zentrierbutzen (12) aufweist, und der axial ausgerichtete Hülsenabschnitt (42) der Führungsscheibe (10) endseitig gemeinsam mit einem radial gestuften Abschnitt (14) des Arbeitsexzenters (4) ein Dichtungslabyrinth (15) bildet.

2. Spannvorrichtung nach Anspruch 1, wobei der Zeiger (24) eine Kröpfung (30) aufweist, die eine Verdrehung des Arbeitsexzenters (4) über eine Versteifungsrippe (29) des Maschinenteils (19) ermöglicht.

3. Spannvorrichtung nach Anspruch 2, bei der in einer Arretierstellung eine bevorzugt als Bohrung (26) gestaltete Aussparung des Zeigers (24) mit einer Bohrung oder einer Aussparung (27) der Schildplatte (7) korrespondiert und diese Position mit dem Haltestift (28) gesichert werden kann.

4. Spannvorrichtung nach Anspruch 1, versehen mit einer Dämpfungseinrichtung (21), die zwischen einem drehstarren Bauteil und mittelbar oder unmittelbar mit dem Arbeitsexzenter (4) der Spannvorrichtung (1) angeordnet ist.

5. Spannvorrichtung nach Anspruch 4, wobei als Dämpfungseinrichtung (21) eine zwischen dem Arbeitsexzenter (4) und einem Schraubenkopf (20) der Verschraubung (18) eingesetzt separate Reibscheibe (22) vorgesehen ist.

6. Spannvorrichtung nach Anspruch 4, die zur Bildung einer Dämpfungseinrichtung (21) eine separate Reibscheibe (22) einschließt, die zwischen dem Arbeitsexzenter (4) und einer an dem Tragkörper (5) lagefixierten Stützscheibe (17) angeordnet ist.

7. Spannvorrichtung nach Anspruch 4, die als Dämpfungseinrichtung (21) eine einstückig mit einer Gleitlagerbuchse (6) verbundene, als ein Bord gestaltete Reibscheibe umfasst.

8. Spannvorrichtung nach Anspruch 1, wobei die Torsionsfeder mit einem ersten Federende (11) an dem Arbeitsexzenter (4) und deren zweites Federende (9) an einem Bord oder einer Rampe der an der Schildplatte (7) drehfixierten Führungsscheibe (10) abgestützt ist.

9. Spannvorrichtung nach Anspruch 1, bei der die Werkzeugaufnahme (41) des einstückig mit dem Arbeitsexzenters (4) verbundenen Zeigers (25) so gestaltet ist, dass eine Verstellung des Arbeitsexzenters (4) mit einem handelsüblichen Mantelschlüssel erfolgen kann.

10. Verfahren zur Montage einer Spannvorrichtung (1), die für ein Zugmittel (16) eines Zugmitteltriebs bestimmt ist, mit folgendem Aufbau:
- eine ortsfest an einem Maschinenteil (19) fixierte Schildplatte (7), an der ein hohlzylindrisch gestalteter, axial vorstehender Tragkörper (5) drehstarr befestigt ist;
- ein gegen ein Federmittel (8) begrenzt verdrehbarer, den Tragkörper (5) umschließender Arbeitsexzenter (4);
- eine den Arbeitsexzenter (4) koaxial umschließende, wälzgelagerte Spannrolle (2), die in einer Einbaulage der Spannvorrichtung (1) kraftschlüssig an einem Zugmittel (16) abgestützt ist;
- eine Arretiereinrichtung (25), mit der der Arbeitsexzenter (4) gegenüber der Schildplatte (7) in einer Endlage mittels eines Haltestiftes (28) fixierbar ist, dazu ist der Arbeitsexzenter (4) einstückig mit einem sich radial über eine Mantelfläche (31) der Spannrolle (2) sich erstreckenden Zeiger (24) versehen, der endseitig eine Aufnahme für den Haltestift (28) einschließt;
- eine Anzeige, die eine Einstellung des Arbeitsexzenters (4) gegenüber der Schildplatte (7) verdeutlicht;
- eine durch eine Längsbohrung (40) des Tragkörpers (5) geführte Verschraubung (18), mit der die Spannvorrichtung (1) befestigt ist;
die Montage erfolgt in folgenden Schritten:
Vormontage
- Befestigen des Tragkörpers (5) an der Schildplatte (7);
- axiales Aufschieben der Bauteile, Führungsscheibe (10), Federmittel (8), Arbeitsexzenter (4) einschließlich der Gleitlagerbuchse (6) und der Spannrolle (2) auf den Tragkörper (5) in einer Anordnung, in der das Federmittel (8) vorgespannt ist;
- Einsetzen einer Verschraubung (18) in die Längsbohrung (40) des Tragkörpers (5), nachdem zuvor eine an dem Tragkörper (5) und dem Arbeitsexzenter (4) abgestützte Scheibe in Verbindung einer Reibscheibe (22) montiert wurde;
- Verdrehen des Arbeitsexzenters (4) in eine Endlage, in der ein zwischen einem Zeiger (24) des Arbeitsexzenters (4) und der Schildplatte (7) angeordneter Haltestift (28), den Arbeitsexzenter (4) arretiert;
Endmontage
- Befestigung der Spannvorrichtung (1), bei der das Maschinenteil (19) an einem Gehäuse (23) verschraubt wird;
- Auflegen des Zugmittels (16) auf alle Riemenscheiben des Zugmitteltriebs;
- Lösen des Haltestiftes (28), wodurch das Federmittel (8) eine selbsttätige Verdrehung des Arbeitsexzenters (4) auslöst und dabei das Zugmittel (16) spannt.

## Claims

1. Tensioning device (1) for a tensioning means drive, said tensioning device comprising:
- a shield plate (7), which is secured to a machine part (19) in a fixed manner and to which a hollow-cylindrically-shaped, axially protruding support body (5) is secured so as to be torsionally stiff;
- a working eccentric (4), which can be rotated in a limited manner in opposition to a spring means (8) and surrounds the support body (5),
- a roller-bearing-mounted tension roller (2), which surrounds the working eccentric (4) in a coaxial manner and, in an installed position of the tensioning device (1), abuts against a tensioning means (16) in a force-fitting manner;
- a locking device (25) by means of which the working eccentric (4) is securable in an end position in relation to the shield plate (7) by means of a retaining pin (28);
- a screw connection (18) guided through a longitudinal bore (40) of the support body (5), said screw connection securing the tensioning device (1);
- a display, which illustrates an adjustment of the working eccentric (4) in relation to the shield plate (7);
**characterized in that** for forming the locking device (25) the working eccentric (4) is connected in one piece to a pointer (24), which extends radially over an outer contour, an outside surface (31) of the tensioning roller (2) and which is located in an installation space (33) defined axially by the tension roller (2) and the shield plate (7), at the end face comprises a tool accommodating means (41) and an accommodating means for the retaining pin (28), and as spring means (8) a torsion spring is guided at an axially aligned sleeve portion (42) of a guide disc (10), which, for forming an anti-rotating device (34), has at least one centring button (12), which is axially aligned opposite the sleeve portion, fitted in a form-fitting manner into a recess (13) of the shield plate (7), and the axially aligned sleeve portion (42) of the guide disc (10) at the end face forms a labyrinth seal (15) together with a radially stepped portion (14) of the working eccentric (4).

2. Tensioning device according to Claim 1, wherein the pointer (24) has a crank (30), which enables a rotation of the working eccentric (4) over a reinforcement rib (29) of the machine part (19).

3. Tensioning device according to Claim 2, where, in a locking position, a recess of the pointer (24), developed preferably as bore (26), corresponds with a bore or a recess (27) of the shield plate (7) and this position can be secured by way of the retaining pin (28).

4. Tensioning device according to Claim 1, provided with a damping device (21), which is located between a torsionally stiff component and directly or indirectly with the working eccentric (4) of the tensioning device (1).

5. Tensioning device according to Claim 4, wherein as damping device (21) a separate friction disc (22) is provided, inserted between the working eccentric (4) and a screw head (20) of the screw connection (18).

6. Tensioning device according to Claim 4, which, for forming a damping device (21), comprises a separate friction disc (22), which is located between the working eccentric (4) and a support disc (17) that is fixed in place on the support body (5).

7. Tensioning device according to Claim 4, which as damping device (21) comprises a friction disc that is connected in one piece to a plain bearing bush (6) and is in the form of a rim.

8. Tensioning device according to Claim 1, wherein the torsion spring is supported on the working eccentric (4) by way of a first spring end (11) and its second spring end (9) is supported on a rim or a ramp of the guide disc (10) that is rotationally fixed on the shield plate (7).

9. Tensioning device according to Claim 1, where the tool accommodating means (41) of the pointer (25) that is integrally connected to the working eccentric (4) is developed such that an adjustment of the working eccentric (4) can be effected by way of a commercially available key.

10. Method for mounting a tensioning device (1), which is intended for a tensioning means (16) of a tensioning means drive, with the following characteristics:
- a shield plate (7), which is secured to a machine part (19) in a fixed manner and to which a hollow-cylindrically-shaped, axially protruding support body (5) is secured so as to be torsionally stiff;
- a working eccentric (4), which can be rotated in a limited manner in opposition to a spring means (8) and surrounds the support body (5);
- a roller-bearing-mounted tension roller (2), which surrounds the working eccentric (4) in a coaxial manner and, in an installed position of the tensioning device (1), is supported on a tensioning means (16) in a force-fitting manner;
- a locking device (25), by means of which the working eccentric (4) is securable in an end position in relation to the shield plate (7) by means of a retaining pin (28), to which end the working eccentric (4) is provided in one piece with a pointer (24) that extends radially over the outside surface (31) of the tension roller (2), said pointer comprising at the end face an accommodating means for the retaining pin (28);
- a display, which illustrates an adjustment of the working eccentric (4) in relation to the shield plate (7);
- a screw connection (18) that is guided through a longitudinal bore (40) of the support body (5), the tensioning device (1) being secured by means of said screw connection;
the assembly is executed in the following steps:
pre-assembly
- secure the support body (5) to the shield plate (7);
- slide the components, guide disc (10), spring means (8), working eccentric (4) including the plain bearing bush (6) and the tension roller (2) axially onto the support body (5) in an arrangement in which the spring means (8) is pre-tensioned;
- insert a screw connection (18) into the longitudinal bore (40) of the support body (5), after first of all mounting a disc supported on the support body (5) and the working eccentric (4) in conjunction with a friction disc (22);
- rotate the working eccentric (4) into an end position, in which a retaining pin (28), located between a pointer (24) of the working eccentric (4) and the shield plate (7), locks the working eccentric (4);
final assembly
- secure the tensioning device (1), where the machine part (19) is screw-connected to a housing (23);
- place the tensioning means (16) onto all belt pulleys of the tensioning means drive;
- release the retaining pin (28), whereby the spring means (8) triggers an automatic rotation of the working eccentric (4) and at the same time tensions the tensioning means (16).

## Revendications

1. Dispositif tendeur (1) pour entraînement à moyen de traction, comprenant :
- un panneau de protection (7) fixé fixement à une partie de machine (19), sur lequel est fixé de manière rigide en rotation un corps porteur (5) saillant axialement et configuré sous forme cylindrique creuse,
- un excentrique de travail (4) entourant le corps porteur (5) et pouvant tourner de manière limitée contre un moyen de ressort (8) ;
- un galet-tendeur (2) supporté sur palier à roulement, entourant coaxialement l'excentrique de travail (4), qui s'applique dans une position de montage du dispositif tendeur (1) par engagement par force contre un moyen de traction (16) ;
- un dispositif de blocage (25) avec lequel l'excentrique de travail (4) peut être fixé par rapport au panneau de protection (7) dans une position de fin de course au moyen d'une goupille de fixation (28) ;
- un élément de vissage (18) guidé à travers un alésage longitudinal (40) du corps porteur (5), avec lequel le dispositif tendeur (1) est fixé ;
- un affichage qui indique un ajustement de l'excentrique de travail (4) par rapport au panneau de protection (7) ;
**caractérisé en ce que** pour la formation du dispositif de blocage (25), l'excentrique de travail (4) est connecté d'une seule pièce à un pointeau (24) s'étendant radialement par-dessus un contour extérieur, une surface d'enveloppe (31) du galet-tendeur (2), qui est disposé dans un espace de montage (33) limité axialement par le galet tendeur (2) et le panneau de protection (7) qui forme du côté de l'extrémité un logement d'outil (41) ainsi qu'un logement pour la goupille de fixation (28), et **en ce qu'**un ressort de torsion est guidé en tant que moyen de ressort (8) sur une portion de douille (42) orientée axialement d'un disque de guidage (10), qui présente, pour former une fixation contre la rotation (34), au moins un ergot de centrage (12) orienté axialement à l'opposé de la portion de douille, ajusté par engagement par coopération de forme dans un évidement (13) du panneau de protection (7), et la portion de douille (42) orientée axialement du disque de guidage (10) forme, du côté de l'extrémité, conjointement avec une portion étagée radialement (14) de l'excentrique de travail (4), un joint à labyrinthe (15).

2. Dispositif tendeur selon la revendication 1, dans lequel le pointeau (24) présente un coudage (30), qui permet une rotation de l'excentrique de travail (4) par-dessus une nervure de renforcement (29) de la partie de machine (19).

3. Dispositif tendeur selon la revendication 2, dans lequel, dans une position de blocage, un évidement du pointeau (24) configuré de préférence sous forme d'alésage (26) correspond à un alésage ou à un évidement (27) du panneau de protection (7) et cette position peut être fixée avec la goupille de fixation (28).

4. Dispositif tendeur selon la revendication 1, pourvu d'un dispositif d'amortissement (21), qui est disposé entre un composant rigide en rotation et, de manière indirecte ou directe avec l'excentrique de travail (4) du dispositif tendeur (1).

5. Dispositif tendeur selon la revendication 4, dans lequel il est prévu un disque de friction (22) séparé inséré en tant que dispositif d'amortissement (21) entre l'excentrique de travail (4) et une tête de vis (20) de l'élément de vissage (18).

6. Dispositif tendeur selon la revendication 4, qui comprend, pour former un dispositif d'amortissement (21), un disque de friction séparé (22) qui est disposé entre l'excentrique de travail (4) et un disque de support (17) fixé en position sur le corps porteur (5).

7. Dispositif tendeur selon la revendication 4, qui comprend, en tant que dispositif d'amortissement (21), un disque de friction configuré en tant que bord, connecté d'une seule pièce à une douille de palier lisse (6).

8. Dispositif tendeur selon la revendication 1, dans lequel le ressort de torsion est supporté par une première extrémité de ressort (11) sur l'excentrique de travail (4) et par sa deuxième extrémité de ressort (9) à un bord ou une rampe du disque de guidage (10) fixé en rotation sur le plateau de protection (7).

9. Dispositif tendeur selon la revendication 1, dans lequel le logement d'outil (41) du pointeau (25) connecté d'une seule pièce à l'excentrique de travail (4) est configuré de telle sorte qu'un réglage de l'excentrique de travail (4) puisse avoir lieu avec une clé d'enveloppe usuelle dans le commerce.

10. Procédé de montage d'un dispositif tendeur (1) qui est prévu pour un moyen de traction (16) d'un entraînement à moyen de traction, comprenant la structure suivante :
- un panneau de protection (7) fixé de manière fixe sur une partie de machine (19), sur lequel est fixé de manière rigide en rotation un corps porteur (5) saillant axialement et configuré sous forme cylindrique creuse ;
- un excentrique de travail (4) entourant le corps porteur (5) et pouvant tourner de manière limité contre un moyen de ressort (8) ;
- un galet tendeur (2) supporté sur palier à roulement, entourant coaxialement l'excentrique de travail (4), qui s'applique dans une position de montage du dispositif tendeur (1) par engagement par force contre un moyen de traction (16) ;
- un dispositif de blocage (25) avec lequel l'excentrique de travail (4) peut être fixé par rapport au panneau de protection (7) dans une position de fin de course au moyen d'une goupille de fixation (28) et à cet effet l'excentrique de travail (4) est pourvu d'une seule pièce d'un pointeau (24) s'étendant radialement par-dessus une surface d'enveloppe (31) du galet tendeur (2), qui forme du côté de l'extrémité un logement pour la goupille de fixation (28) ;
- un affichage qui indique un ajustement de l'excentrique de travail (4) par rapport au panneau de protection (7) ;
- un élément de vissage (18) guidé à travers un alésage longitudinal (40) du corps porteur (5), avec lequel le dispositif tendeur (1) est fixé ;
le montage s'effectuant suivant les étapes suivantes :
Prémontage
- fixation du corps porteur (5) sur le panneau de protection (7) ;
- enfoncement axial des composants disque de guidage (10), moyen de ressort (8), excentrique de travail (4) y compris la douille de palier lisse (6) et le galet tendeur (2), sur le corps porteur (5) dans un agencement dans lequel le moyen de ressort (8) est précontraint ;
- insertion d'un élément de vissage (18) dans l'alésage longitudinal (40) du corps porteur (5), après que l'on ait monté auparavant un disque supporté sur le corps porteur (5) et l'excentrique de travail (4) en liaison avec un disque de friction (22) ;
- rotation de l'excentrique de travail (4) dans une position de fin de course dans laquelle une goupille de fixation (28) disposée entre un pointeau (24) de l'excentrique de travail (4) et le panneau de protection (7), bloque l'excentrique de travail (4) ;
Montage final
- fixation du dispositif tendeur (1), dans lequel la partie de machine (19) est vissée sur un boîtier (23) ;
- pose du moyen de traction (16) sur toutes les poulies à courroie de l'entraînement à moyen de traction ;
- desserrage de la goupille de fixation (28), de sorte que le moyen de ressort (8) déclenche une rotation automatique de l'excentrique de travail (4) et tende ainsi le moyen de traction (16).
